# EUROPEAN PATENT SPECIFICATION

(11) **EP 3 553 675 B1**
(45) Date of publication and mention of the grant of the patent: **24.03.2021**
(21) Application number: 17877702.5
(22) Date of filing: 29.11.2017
(51) Int. Cl.: G06F 16/9537, G06Q 50/10

(54) **PICTURE-BASED METHOD AND APPARATUS FOR IMPLEMENTING SERVICE OPERATIONS**
BILDBASIERTES VERFAHREN UND VORRICHTUNG ZUR DURCHFÜHRUNG VON SERVICEOPERATIONEN
APPAREIL ET PROCÉDÉ BASÉS SUR IMAGE DESTINÉS À METTRE EN OEUVRE DES OPÉRATIONS DE SERVICE

(30) Priority: 07.12.2016 CN 201611143094
(43) Date of publication of application: 16.10.2019
(73) Proprietor: Advanced New Technologies Co., Ltd., George Town, Grand Cayman KY1-9008 (KY)
(72) Inventor: LOU, Xianlin, Hangzhou, Zhejiang 311121 (CN)
(74) Representative: Fish & Richardson P.C.
(86) International application number: PCT/CN2017/113490
(87) International publication number: WO 2018/103557

(56) References cited:
- WO-A1-2007/113462
- CN-A- 103 365 964
- CN-A- 103 376 110
- CN-A- 105 991 716
- CN-A- 106 997 372
- US-A1- 2015 006 328

## Description

### TECHNICAL FIELD

The present application relates to the field of Internet technologies, and in particular, to a method and device for implementing service operations based on images.

### BACKGROUND

With fast development of Internet technologies, the number of users of social apps (Application, application) is sharply increasing, and the number of users chat with relatives and friends, share feelings, share images, share statuses, and so on by using the social apps is also increasing. WO 2007/113462 (A1) describes analyzing metadata associated with a captured image to enable media content to be distributed and stored, together with other data, to determine a context for the captured image. This enables the media file to be named, stored and/or distributed to selected groups of users in accordance with the context of the file

### SUMMARY

In view of this, the present application provides a method and device for implementing service operations based on images.

The invention is set out in the appended independent claims. The appended dependent claims define preferred embodiments of the invention.

It can be seen from the description that, based on the implementation solutions of the present application, a user can obtain the information about the corresponding service object by using the images shared by the associated user, without a need to redirect to another page. Therefore, the operations are simple and fast, thereby improving use experience of the user.

### BRIEF DESCRIPTION OF DRAWINGS

FIG. 1 is a schematic flowchart illustrating a method for implementing service operations based on images, according to an example implementation of the present application;
FIG. 2 is a schematic flowchart illustrating another method for implementing service operations based on images, according to an example implementation of the present application;
FIG. 3 is a schematic diagram illustrating a client web page, according to an example implementation of the present application;
FIG. 4 is a schematic diagram illustrating a client web page, according to an example implementation of the present application;
FIG. 5 is a schematic diagram illustrating a client web page, according to an example implementation of the present application;
FIG. 6 is a schematic diagram illustrating a client web page, according to an example implementation of the present application;
FIG. 7 is a schematic diagram illustrating a client web page, according to an example implementation of the present application;
FIG. 8 is a schematic structural diagram illustrating a device for implementing service operations based on images, according to an example implementation of the present application;
FIG. 9 is a block diagram illustrating a device for implementing service operations based on images, according to an example implementation of the present application; and
FIG. 10 is a block diagram illustrating another device for implementing service operations based on images, according to an example implementation of the present application.

### DESCRIPTION OF IMPLEMENTATIONS

Example implementations are described in detail here, and examples of the example implementations are presented in the accompanying drawings. When the following description relates to the accompanying drawings, unless specified otherwise, same numbers in different accompanying drawings represent same or similar elements. Implementations described in the following example implementations do not represent all implementations consistent with the present application. Instead, they are only examples of devices and methods consistent with some aspects of the present application that are described in detail in the appended claims.

The terms used in the present application are merely for illustrating specific implementations, and are not intended to limit the present application. The terms "a" and "the" of singular forms used in the present application and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. may be used in the present application to describe various types of information, the information is not limited to the terms. These terms are only used to differentiate information of a same type. For example, first information can alternatively be referred to as second information, and similarly, the second information can alternatively be referred to as the first information. Depending on the context, for example, the word "if" used here can be explained as "while", "when", or "in response to determining".

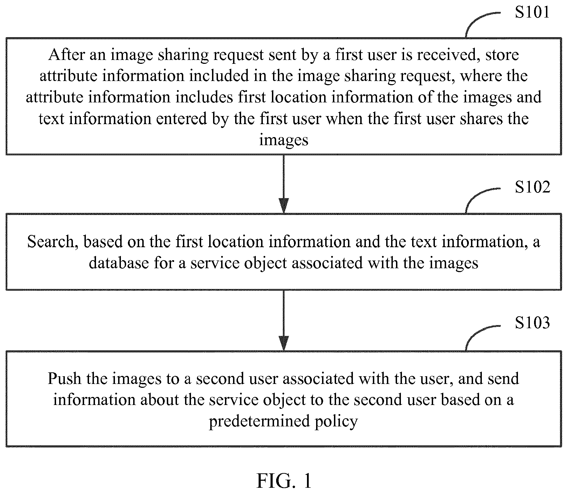

FIG. 1 is a schematic flowchart illustrating a method for implementing service operations based on images, according to an example implementation of the present application.

Referring to FIG. 1, the method for implementing service operations based on images can be applied to a server, for example, a server or a server cluster deployed by a service provider, and the method includes the following steps.

Step 101: After an image sharing request sent by a first user is received, store attribute information included in the image sharing request, where the attribute information includes first location information of the images and text information entered by the first user when the first user shares the images.

In the present implementation, the first user can share the images by using a sharing function provided in a social app. For example, the first user can share the images by using Community of ALIPAY, or the first user can alternatively share the images by using Moments of WeChat. Certainly, in addition to the social app, the user can alternatively share the images by using an app that provides a community function or a forum function. Implementations are not limited in the present application.

Step 102: Search, based on the first location information and the text information, a database for a service object associated with the images.

In the present implementation, the database may be a database that stores location information and information about a corresponding service object, such as a map database, and the service object may include a third-party service organization such as a shop, a school, or a bank.

Step 103: Push the images to a second user associated with the user, and send information about the service object to the second user based on a predetermined policy.

In the present implementation, after receiving the image sharing request sent by the first user, the server may push the images to the second user associated with the first user. The second user may be a friend of the user, a person who follows the user, a person who has performed service interaction with the user, or the like.

In the present implementation, the server may first push, to the second user, a notification that there is new sharing, and when the second user checks the new sharing, the images may then be sent to the second user. For processing and implementation of this part, refer to related technologies. Details are omitted here for simplicity in the present application.

In the present implementation, the predetermined policy may be active sending. For example, the server can send the information about the service object and the images to the second user together. Alternatively, the predetermined policy may be triggered sending. For example, when receiving a service operation request for the images that is sent by the second user, the server can send the information about the service object to the second user.

It is worthwhile to note that interaction processes of the user and the server that are described in the present implementation of the present application, such as an interaction process of sending the image sharing request by the first user to the server and an interaction process of pushing image sharing by the server to the second user, are all interaction processes of the server and a client logged in by the related user using a user account of the user. Details are omitted below for simplicity.

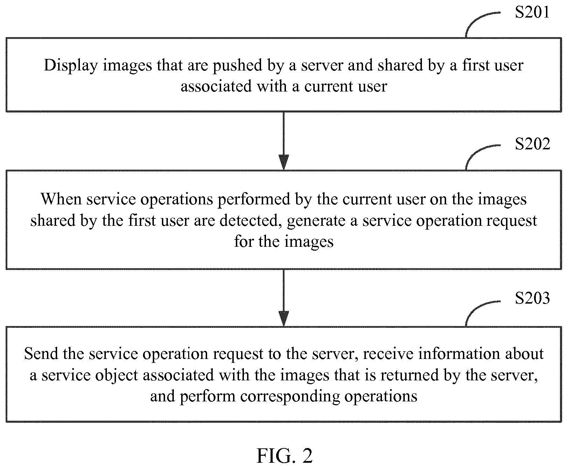

FIG. 2 is a schematic flowchart illustrating another method for implementing service operations based on images, according to an example implementation of the present application.

Referring to FIG. 2, the method for implementing service operations based on images can be applied to a client and includes the following steps.

Step 201: Display images that are pushed by a server and shared by a first user associated with a current user.

Step 202: When service operations performed by the current user on the images shared by the first user are detected, generate a service operation request for the images.

In the present implementation, the current user may select, in a way such as tap or double-touch, the images shared by the first user. The client of the current user can further display one or more service operation options, and the service operation option is oriented to a service object associated with the images. When selecting a certain service operation option, the user can determine that the service operations performed on the images are detected.

Step 203: Send the service operation request to the server, receive information about a service object associated with the images that is returned by the server, and perform corresponding operations.

In the present implementation, after receiving name information and second location information of the service object that are returned by the server, the client of the current user can invoke a map app and locate the service object in the map app. Certainly, in practice, if the client of the current user has a map function, the client can alternatively jump to a map page and locate the service object on the map page.

In the present implementation, after receiving the service information of the service object that is returned by the server, the client of the current user can display the service information, so that the user can check the service information. The service information includes at least one of the following information: an experience service, a contact number, promotion information, discount information, etc.

In the present implementation, after receiving payment information of the service object that is returned by the server, the client of the current user can jump to a payment page oriented to the service object, so that the user completes a payment operation. Certainly, in practice, if the client of the current user does not have a payment function, another payment app may alternatively be invoked. Implementations are not limited in the present application.

It can be seen from the previous description that, based on the implementation solutions of the present application, the user can implement operations on the corresponding service object such as location, service search, and payment by using the images shared by the associated user, without a need to redirect to another page. Therefore, the operations are simple and fast, thereby improving use experience of the user.

The following describes the technical solutions of the present application in detail by using three phases: publishing of image sharing, searching of an associated service object, and implementation of service operations.

### I. Publishing of image sharing

In the present implementation, the Community of ALIPAY is used as an example, and the user can share images of food, scenery, etc. in the Community. For ease of differentiation, the user who shares the images may be referred to as the first user. When the first user selects a "record life" function of ALIPAY, an image that needs to be shared may be added. For example, a camera may be invoked to take a photo or a photo may be selected from photo libraries. After the first user adds an image, the client (ALIPAY) can obtain attribute information of current image sharing. The attribute information can generally include location coordinates (first location information) of the image and text information entered when the first user shares the image. The location coordinates of the image are generally obtained and stored by the terminal device when the image is being taken. In this example, when the user selects sending, the client may add the obtained first location information, text information, etc. to the image sharing request and send the image sharing request to the server.

In the present implementation, after receiving the image sharing request, the server can generate a unique image ID for the image, and store a mapping relationship between the attribute information and the image ID.

Assume that the first user White shares an image of a kebab in the Community, location coordinates of the image are coordinates 1, and text information is "kebabs here are really delicious". The server generates an image ID 1 for the corresponding image, and the server can store a mapping relationship between the attribute information and the image ID in the following table. It is worthwhile to note that Table 1 is merely an example for description. In practice, the server may not organize such a table. Implementations are not limited in the present application.

**Table 1**

| Image ID | Location coordinates of an image | Text information |
|---|---|---|
| 1 | Coordinates 1 | Kebabs here are really delicious |
| 2 | Coordinates 2 | Beautiful! |
| 3 | Coordinates 3 | Superb film |

In the present implementation, the server can add the image ID 1 of the image to image sharing of White and push the image sharing of White to a friend of White, and the friend of White can check the sharing by using the Community of ALIPAY.

### II. Searching of an associated service object

In the present implementation, after receiving the image sharing request sent by White, the server can search, based on the first location information and the text information that are included in the image sharing request, the database for the service object associated with the image. The database may be a service object database of this platform, or the database may alternatively be a database provided by another platform, for example, a certain map database. Implementations are not limited in the present application.

In the present implementation, because an error may occur during GPS positioning, the location coordinates (first location information) obtained by the terminal device when the terminal device takes the image may not be accurate enough. The server can identify a plurality of matching shops based on the first location information. For example, the server can identify "Alibaba Kebabs" and "Cleanness Dry Cleaner". In such a case, the server can separately match, against information of "Alibaba Kebabs" and information of "Cleanness Dry Cleaner", the text information of "kebabs here are really delicious" that is sent by White. For example, the text information is divided into words, and the words are separately matched against the information of "Alibaba Kebabs" and the information of "Cleanness Dry Cleaner". In this example, the server can identify that "kebabs" in the text information matches services of "Alibaba Kebabs", and can further determine "Alibaba Kebabs" as a shop associated with the image. Certainly, in practice, the text information can alternatively be matched against the service object in another method. Generally, a most matching service object can be determined as the service object associated with the image.

In the present implementation, after receiving the image sharing request sent by White, the server can search for the shop associated with the image shared by White, and store a mapping relationship between the image ID 1 of the image, the found shop, and the accurate location coordinates (second location information) of the shop. The server may alternatively search for the shop after receiving a service operation request for the shop. Implementations are not limited in the present application.

### III. Implementation of service operations

In the present implementation, assume that Black (the second user) is the friend of White. After receiving the image that is pushed by the server and shared by White, a client (ALIPAY) of Black can store the image ID 1 of the image. For example, the client can associate the image ID 1 with the image shared by White and store the image ID 1 and the image.

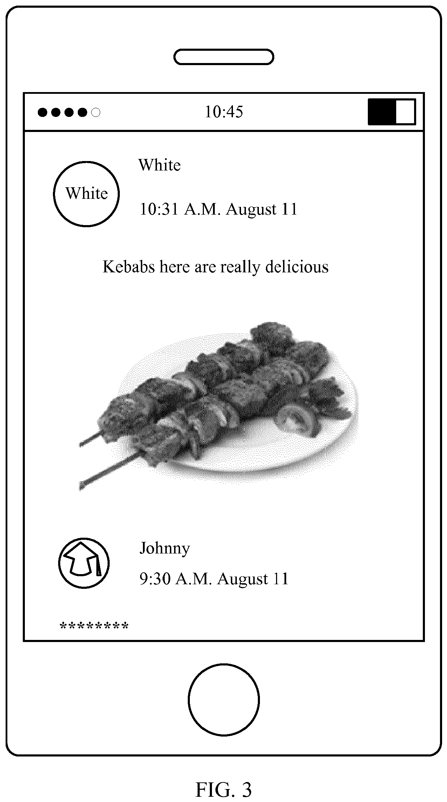

FIG. 3 shows a Community page that can be displayed by the client of Black. Assume that after noticing the image, Black wants to know where White gets the kebabs. In this example, Black does not need to redirect to a chat page to send a message to White, or need to ask White by using Comment in the Community. Black can tap the image, and the client can display one or more service operation options for Black, so that Black can make a selection.

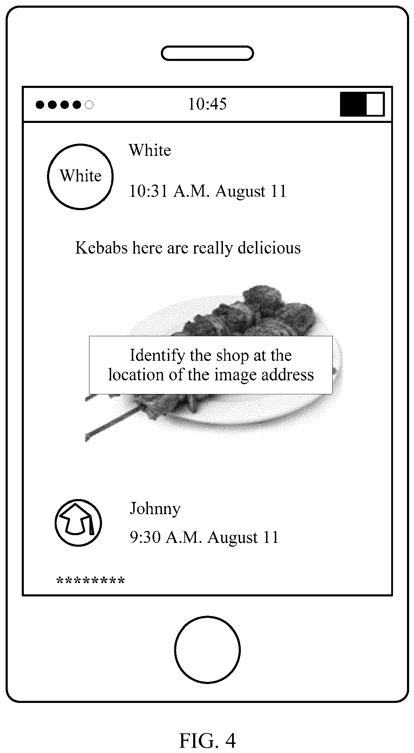

In an example, referring to FIG. 4, after Black taps the image, the client can display the service operation option shown in FIG. 4. When Black selects the operation option, the client can send the image ID 1 of the image to the server. The server can further identify a shop corresponding to the image ID 1.

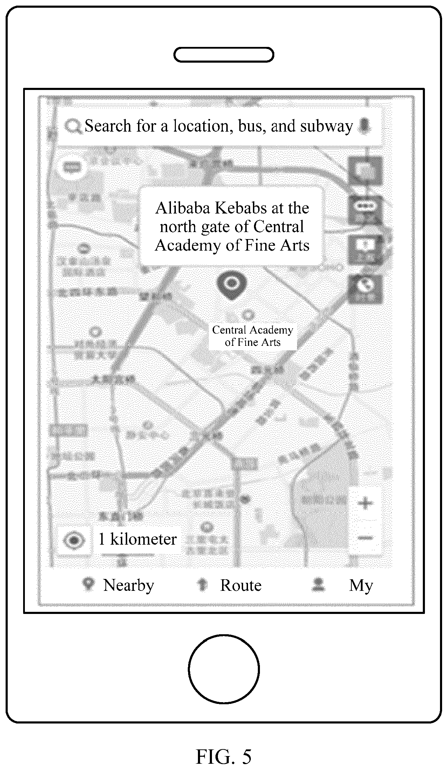

In the present implementation, "identify the shop at the location of the image address" corresponds to an identification request of the service object. After finding a matching shop, the server can return a name and accurate location coordinates of the shop to the client of Black. After receiving the name and the accurate location coordinates, the client of Black can invoke the Amap app to locate the shop in the Amap app, and further display a page shown in FIG. 5. Black can search for information such as a route to the shop by using the page shown in FIG. 5.

Certainly, in practice, after finding the matching shop, the server may alternatively return only the name of the shop to the client of Black, so that the client of Black can display the name of the shop.

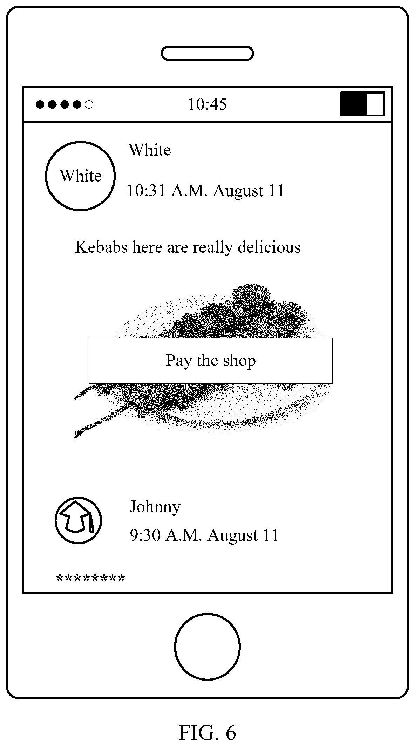

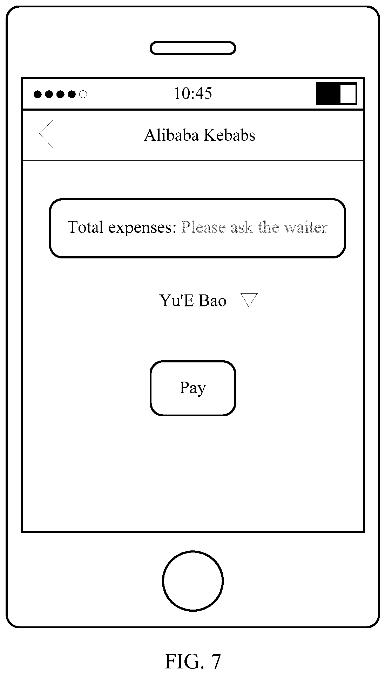

In another example, referring to FIG. 6, after Black taps the image, the client may display a service operation option shown in FIG. 6. "Payment to the shop" corresponds to a payment request oriented to the service object. After finding a matching shop, the server may return payment information of the shop to the client of Black. After receiving the payment information, the client of Black may jump to a payment page oriented to the shop, for example, the client of Black may display a page shown in FIG. 7. Black can pay the shop by using the page shown in FIG. 7.

In another example, after Black taps the image, the client may alternatively display a search request oriented to the service object, for example, the client may display a service operation option (not shown) of "check information about the shop". After finding the matching shop, the server may return service information of the shop to the client of Black, so that the client of Black displays the service information. The service information may include at least one of the following information: an experience service, a contact number, promotion information, discount information, etc.

In another example, after Black taps the image, the client may alternatively display a plurality of service operation options at the same time, and Black may make a selection based on needs of Black.

In another example, the server may send, to Black, both information about the matching shop and the image shared by White. After receiving the image and the information about the shop, the client of Black may display, based on a predetermined display rule, the matching shop while displaying the image shared by White, without needing a manual request of Black.

Based on the previous implementation solutions, after White adds the image and the text information, the client of White may send the first location information and the text information of the image to the server, and the server searches for a corresponding shop and may return the shop to the client. As such, when White selects shared locations, the client may rank, in the first place, the shop found by the server, or automatically add the shop to locations shared by White, so that White does not need to repeatedly search the plurality of locations, thereby improving locating accuracy and improving use experience of the user.

Corresponding to the previous implementation of the methods for implementing service operations based on images, the present application further provides an implementation of a device for implementing service operations based on images.

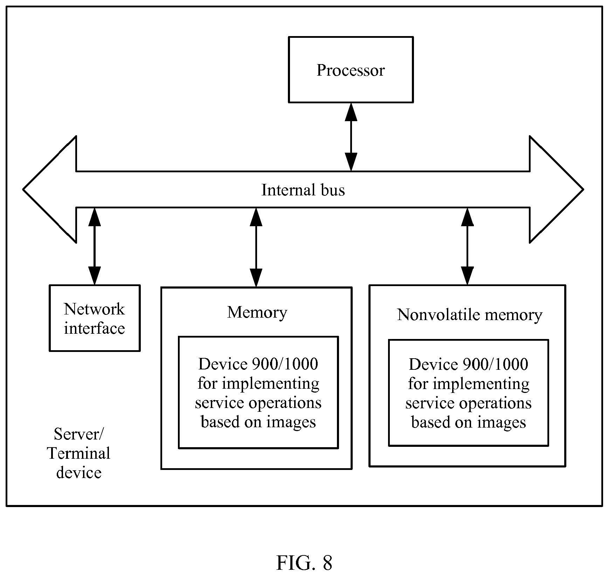

Implementations of the device for implementing service operations based on images in the present application may be separately applied to a client mounted on the terminal device or to a server. The apparatus implementation can be implemented by software, hardware, or a combination of hardware and software. Software implementation is used as an example. As a logical device, the device is formed by reading a corresponding computer program instruction in a non-volatile memory into the memory by a processor of the terminal device or the server where the device is located. From a perspective of hardware, FIG. 8 is a structural diagram illustrating hardware of a terminal device or a server where a device for implementing service operations based on images in the present application is located. In addition to a processor, a memory, a network interface, and a non-volatile memory shown in FIG. 8, the terminal device or the server where the device in the present implementation is located can usually include other hardware based on actual functions of the terminal device or the server. Details are omitted here for simplicity.

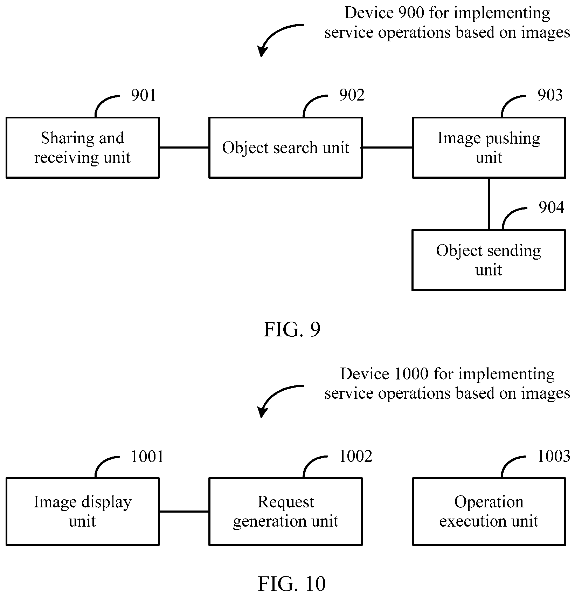

FIG. 9 is a block diagram illustrating a device for implementing service operations based on images, according to an example implementation of the present application.

Referring to FIG. 9, a device 900 for implementing service operations based on images may be applied to the previous server shown in FIG. 8, and includes a sharing and receiving unit 901, an object search unit 902, an image pushing unit 903, and an object sending unit 904.

Because an apparatus implementation basically corresponds to a method implementation, for related parts, references can be made to related descriptions in the method implementation. The previously described apparatus implementation is merely an example. The units described as separate parts may or may not be physically separate, and parts displayed as units may or may not be physical units, may be located in one position, or may be distributed on a plurality of network units. Some or all of the modules or units can be selected based on actual needs to achieve the objectives of the solutions in the present application. A person of ordinary skill in the art can understand and implement the implementations of the present specification without creative efforts.

The system, device, module, or unit illustrated in the previous implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

The previous descriptions are merely examples of implementations of the present application, but are not intended to limit the scope of the appended claims.

## Claims

1. A method for implementing service operations based on images, the method comprising:
receiving an image sharing request sent by a first user, the image request including one or more images to be shared;
storing (S101) attribute information comprised in the image sharing request, wherein the attribute information comprises first location information of the one or more images and text information entered by the first user when the first user shares the one or more images;
searching (S102), based on the first location information and the text information, a database for a service object associated with the one or more images, the searching (S102) comprising:
searching the database for a service object that matches the first location information to determine a matching service object, and only
when a plurality of service objects are found, additionally matching the text information against
the respective information about each found service object to determine the matching service object, and
determining that the determined matching service object is the service object that is associated with the one or more images;
pushing (S103) the one or more images to a second user associated with the user; and
sending (S103) information about the matching service object to the second user based on a predetermined policy.

2. The method according to claim 1, wherein sending (S103) the information about the service object to the second user based on a predetermined policy comprises:
when a service operation request for the one or more images that is sent by the second user is received, sending the information about the service object to the second user.

3. The method according to claim 2, wherein the service operation request is an identification request of the service object.

4. The method according to claim 3, wherein sending (S 103) the information about the service object to the second user comprises:
sending name information of the service object to the second user.

5. The method according to claim 3, wherein sending (S103) the information about the service object to the second user comprises:
sending second location information of the service object in the database to the second user, so that a client of the second user invokes a map app and locates the service object in the map app.

6. The method according to claim 2, wherein when the service operation request is a service search request of the service object, sending (S103) the information about the service object to the second user comprises:
sending service information of the service object to the second user, so that the second user can check the service information.

7. The method according to claim 6, wherein the service information comprises at least one of the following information: an experience service, a contact number, promotion information, and discount information.

8. The method according to claim 2, wherein, when the service operation request is a payment request, sending (S103) the information about the service object to the second user comprises:
sending payment information of the service object to the second user, so that a client of the second user jumps to a payment page oriented to the service object.

9. The method according to claim 1, wherein sending (S103) the information about the service object to the second user based on a predetermined policy comprises:
sending the information about the service object and the one or more images to the second user together.

10. The method according to claim 1, wherein the one or more images are displayed (S201) and shared by a first user associated with a current user.

11. The method according to claim 10, wherein
when predetermined operations performed by the current user on the one or more images shared by the first user are detected, one or more service operation options are displayed, and if the current user selects the service operation option, it is determined that the service operations performed on the one or more images shared by the first user are detected.

12. A device (900, 1000) for implementing service operations based on images, the device comprising a plurality of modules configured to perform the method of any one of claims 1 to 11.

## Patentansprüche

1. Verfahren zum Implementieren von Serviceoperationen basierend auf Bildern, wobei das Verfahren umfasst:
Empfangen einer Anforderung zum Teilen von Bildern, die von einem ersten Benutzer gesendet wurde, wobei die Bildanforderung ein oder mehrere Bilder beinhaltet, die geteilt werden sollen;
Speichern (S101) von Attributinformationen, die in der Anforderung zum Teilen von Bildern umfasst sind, wobei die Attributinformationen erste Positionsinformationen des einen oder der mehreren Bilder und Textinformationen umfassen, die von dem ersten Benutzer eingegeben werden, wenn der erste Benutzer das eine oder die mehreren Bilder teilt; Durchsuchen (S 102), basierend auf den ersten Positionsinformationen und den Textinformationen, einer Datenbank nach einem Serviceobjekt, das dem einen oder mehreren Bildern zugeordnet ist, wobei das Durchsuchen (S102) umfasst:
Durchsuchen der Datenbank nach einem Serviceobjekt, das mit den ersten Positionsinformationen übereinstimmt, um ein übereinstimmendes Serviceobjekt zu bestimmen, und nur, wenn mehrere Serviceobjekte gefunden werden, zusätzliches Abstimmen der Textinformationen mit den jeweiligen Informationen über jedes gefundene Serviceobjekt, um das übereinstimmende Serviceobjekt zu bestimmen, und
Bestimmen, dass das bestimmte übereinstimmende Serviceobjekt das Serviceobjekt ist, das dem einen oder mehreren Bildern zugeordnet ist;
Pushen (S103) des einen oder der mehreren Bilder an einen zweiten Benutzer, der dem Benutzer zugeordnet ist; und
Senden (S103) von Informationen über das übereinstimmende Serviceobjekt an den zweiten Benutzer, basierend auf einer vorgegebenen Richtlinie.

2. Verfahren nach Anspruch 1, wobei das Senden (S103) der Informationen über das Serviceobjekt an den zweiten Benutzer basierend auf einer vorgegebenen Richtlinie umfasst:
wenn eine vom zweiten Benutzer gesendete Anforderung einer Serviceoperation für das eine oder die mehreren Bilder empfangen wird, Senden der Informationen über das Serviceobjekt an den zweiten Benutzer.

3. Verfahren nach Anspruch 2, wobei die Anforderung der Serviceoperation eine Identifikationsanforderung des Serviceobjekts ist.

4. Verfahren nach Anspruch 3, wobei das Senden (S103) der Informationen über das Serviceobjekt an den zweiten Benutzer umfasst:
Senden von Namensinformationen des Serviceobjekts an den zweiten Benutzer.

5. Verfahren nach Anspruch 3, wobei das Senden (S103) der Informationen über das Serviceobjekt an den zweiten Benutzer umfasst:
Senden von zweiten Positionsinformationen des Serviceobjekts in der Datenbank an den zweiten Benutzer, so dass ein Client des zweiten Benutzers eine Karten-App aufruft und das Serviceobjekt in der Karten-App lokalisiert.

6. Verfahren nach Anspruch 2, wobei, wenn die Anforderung der Serviceoperation eine Servicesuchanforderung des Serviceobjekts ist, das Senden (S103) der Informationen über das Serviceobjekt an den zweiten Benutzer umfasst:
Senden von Serviceinformationen des Serviceobjekts an den zweiten Benutzer, so dass der zweite Benutzer die Serviceinformationen überprüfen kann.

7. Verfahren nach Anspruch 6, wobei die Serviceinformationen mindestens eine der folgenden Informationen umfassen: einen Erlebnisservice, eine Kontaktnummer, Werbeinformationen und Rabattinformationen.

8. Verfahren nach Anspruch 2, wobei, wenn die Anforderung der Serviceoperation eine Zahlungsanforderung ist, das Senden (S103) der Informationen über das Serviceobjekt an den zweiten Benutzer umfasst:
Senden von Zahlungsinformationen des Serviceobjekts an den zweiten Benutzer, so dass ein Client des zweiten Benutzers auf eine auf das Serviceobjekt ausgerichtete Zahlungsseite springt.

9. Verfahren nach Anspruch 1, wobei das Senden (S103) der Informationen über das Serviceobjekt an den zweiten Benutzer basierend auf einer vorgegebenen Richtlinie umfasst:
Senden der Informationen über das Serviceobjekt und der ein oder mehreren Bilder zusammen an den zweiten Benutzer.

10. Verfahren nach Anspruch 1, wobei das eine oder die mehreren Bilder von einem ersten Benutzer, der einem aktuellen Benutzer zugeordnet ist, angezeigt (S201) und geteilt werden.

11. Verfahren nach Anspruch 10 wobei
wenn vorbestimmte Operationen, die vom aktuellen Benutzer auf dem einen oder den mehreren vom ersten Benutzer geteilten Bildern durchgeführt wurden, detektiert werden, werden eine oder mehrere Serviceoperationsoptionen angezeigt, und wenn der aktuelle Benutzer die Serviceoperationsoption auswählt, wird bestimmt, dass die Serviceoperationen, die auf dem einen oder den mehreren vom ersten Benutzer geteilten Bildern durchgeführt wurden, detektiert werden.

12. Vorrichtung (900, 1000) zum Implementieren von Serviceoperationen basierend auf Bildern, wobei die Vorrichtung mehrere Module umfasst, die dazu ausgelegt sind, das Verfahren nach einem der Ansprüche 1 bis 11 durchzuführen.

## Revendications

1. Procédé de mise en œuvre d'opérations de service sur la base d'images, le procédé comprenant les étapes consistant à :
recevoir une demande de partage d'image envoyée par un premier utilisateur, la demande d'image incluant une ou plusieurs images à partager ;
stocker (S101) une information d'attribut comprise dans la demande de partage d'image, l'information d'attribut comprenant une première information de localisation de la ou des images et une information textuelle entrée par le premier utilisateur quand le premier utilisateur partage la ou les images ;
rechercher (S 102) dans une base de données, sur la base de la première information de localisation et de l'information textuelle, un objet de service associé à la ou aux images, la recherche (S102) comprenant les étapes consistant à :
rechercher dans la base de données un objet de service qui concorde avec la première information de localisation pour déterminer un objet de service concordant et, uniquement quand une pluralité d'objets de service sont trouvés, faire également concorder l'information textuelle avec l'information respective concernant chaque objet de service trouvé pour déterminer l'objet de service concordant, et
déterminer que l'objet de service concordant déterminé est l'objet de service qui est associé à la ou aux images ;
transmettre (S103) la ou les images à un second utilisateur associé à l'utilisateur ; et
envoyer (S103) une information concernant l'objet de service concordant au second utilisateur sur la base d'une stratégie prédéterminée.

2. Procédé selon la revendication 1, dans lequel l'envoi (S103) de l'information concernant l'objet de service au second utilisateur sur la base d'une stratégie prédéterminée comprend l'étape consistant à :
quand une demande d'opération de service pour la ou les images qui sont envoyées par le second utilisateur est reçue, envoyer l'information concernant l'objet de service au second utilisateur.

3. Procédé selon la revendication 2, dans lequel la demande d'opération de service est une demande d'identification de l'objet de service.

4. Procédé selon la revendication 3, dans lequel l'envoi (S103) de l'information concernant l'objet de service au second utilisateur comprend l'étape consistant à :
envoyer une information de nom de l'objet de service au second utilisateur.

5. Procédé selon la revendication 3, dans lequel l'envoi (S103) de l'information concernant l'objet de service au second utilisateur comprend l'étape consistant à :
envoyer une seconde information de localisation de l'objet de service dans la base de données au second utilisateur, de sorte qu'un client du second utilisateur appelle une application de cartographie et localise l'objet de service dans l'application de cartographie.

6. Procédé selon la revendication 2, dans lequel, quand la demande d'opération de service est une demande de recherche de service de l'objet de service, l'envoi (S103) de l'information concernant l'objet de service au second utilisateur comprend l'étape consistant à :
envoyer une information de service de l'objet de service au second utilisateur, de sorte que le second utilisateur puisse vérifier l'information de service.

7. Procédé selon la revendication 6, dans lequel l'information de service comprend au moins une des informations suivantes un service d'expérience, un numéro de contact, une information de promotion et une information de remise.

8. Procédé selon la revendication 2, dans lequel, quand la demande d'opération de service est une demande de paiement, l'envoi (S103) de l'information concernant l'objet de service au second utilisateur comprend l'étape consistant à :
envoyer une information de paiement de l'objet de service au second utilisateur, de sorte qu'un client du second utilisateur accède à une page de paiement axée sur l'objet de service.

9. Procédé selon la revendication 1, dans lequel l'envoi (S103) de l'information concernant l'objet de service au second utilisateur sur la base d'une stratégie prédéterminée comprend l'étape consistant à :
envoyer ensemble l'information concernant l'objet de service et la ou les images au second utilisateur.

10. Procédé selon la revendication 1, dans lequel la ou les images sont affichées (S201) et partagées par un premier utilisateur associé à un utilisateur actuel.

11. Procédé selon la revendication 10, dans lequel :
quand des opérations prédéterminées réalisées par l'utilisateur actuel sur la ou les images partagées par le premier utilisateur sont détectées, une ou plusieurs options d'opération de service sont affichées et, si l'utilisateur actuel sélectionne l'option d'opération de service, il est déterminé que les opérations de service réalisées sur la ou les images partagées par le premier utilisateur sont détectées.

12. Dispositif (900, 1000) pour mettre en œuvre des opérations de service sur la base d'images, le dispositif comprenant une pluralité de modules configurés pour réaliser le procédé selon l'une quelconque des revendications 1 à 11.
